(19) Europäisches Patentamt / European Patent Office / Office européen des brevets

(11) **EP 4 437 572 B1**

(12) **EUROPEAN PATENT SPECIFICATION**

(45) Date of publication and mention
of the grant of the patent:
**12.11.2025 Bulletin 2025/46**

(21) Application number: **22821538.0**

(22) Date of filing: **24.11.2022**

(51) International Patent Classification (IPC):
*H01G 11/02* (2013.01)    *H01G 11/38* (2013.01)
*H01G 11/62* (2013.01)    *H01G 11/86* (2013.01)
*H01G 11/68* (2013.01)    *H01G 11/64* (2013.01)
*H01G 11/66* (2013.01)    *H01G 11/70* (2013.01)

(52) Cooperative Patent Classification (CPC):
**H01G 11/02; H01G 11/38; H01G 11/62;**
**H01G 11/68; H01G 11/86;** H01G 11/64;
H01G 11/66; H01G 11/70; Y02E 60/13

(86) International application number:
**PCT/EP2022/083100**

(87) International publication number:
**WO 2023/094509 (01.06.2023 Gazette 2023/22)**

(54) **SUPERCAPACITOR FOR ENERGY STORAGE**

SUPERKONDENSATOR ZUR ENERGIESPEICHERUNG

SUPERCONDENSATEUR POUR LE STOCKAGE D'ÉNERGIE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **24.11.2021 EP 21383065**

(43) Date of publication of application:
**02.10.2024 Bulletin 2024/40**

(73) Proprietor: **Fundación IMDEA Energía**
**28935 Móstoles (Madrid) (ES)**

(72) Inventors:
• **NAVALPOTRO MOLINA, Paula**
**28935 Móstoles, Madrid (ES)**
• **PALMA DEL VAL, Jesús**
**28935 Móstoles, Madrid (ES)**
• **MARCILLA GARCÍA, Rebeca**
**28935 Móstoles, Madrid (ES)**

(74) Representative: **ABG Intellectual Property Law,**
**S.L.**
**Avenida de Burgos, 16D**
**Edificio Euromor**
**28036 Madrid (ES)**

(56) References cited:
EP-A1- 3 671 928          WO-A1-2018/119044
WO-A1-2021/209585     US-A1- 2016 314 906
US-A1- 2017 256 366     US-A1- 2018 072 669

• **NAVALPOTRO PAULA ET AL: "High performance**
**hybrid supercapacitors by using para-**
**Benzoquinone ionic liquid redox electrolyte",**
JOURNAL OF POWER SOURCES, vol. 306, 1
February 2016 (2016-02-01), AMSTERDAM, NL,
pages 711 - 717, XP055925250, ISSN: 0378-7753,
DOI: 10.1016/j.jpowsour.2015.12.103
• **RAVIKUMAR M K ET AL: "The renaissance in**
**redox flow batteries",** JOURNAL OF SOLID
STATE ELECTROCHEMISTRY, SPRINGER,
BERLIN, DE, vol. 21, no. 9, 23 November 2016
(2016-11-23), pages 2467 - 2488, XP036301671,
ISSN: 1432-8488, [retrieved on 20161123], DOI:
10.1007/S10008-016-3472-4

## Description

### TECHNICAL FIELD

The present invention relates to the field of supercapacitors.

### BACKGROUND

The use and development of suitable energy-storage systems have been heavily pursued over the last years. Supercapacitors are a type of electrochemical energy storage devices characterized by high power density and good cyclability, but with low energy density.

Supercapacitors can be classified in two types based on the charge storage mechanism, namely pseudocapacitive and double layer electrical capacitor (EDLC). In recent years, the development of hybrid storage supercapacitors has emerged as an advantageous strategy, combining both types of capacitor materials, such as carbon-based redox electrodes and/or redox electrolytes. Hybrid supercapacitors are designed to be able to deliver higher specific capacitance in comparison to the existing electric double layer capacitor (EDLC) and pseudocapacitors.

US 2017/256366 A1 discloses an EDLC with electrodes based on activated carbon pellets pressed into a freestanding electrode and comprising an electrolyte comprising redox couples including bromine containing species.

Navalpotro et al.(Navalpotro et al., Journal of Power Sources 306 (2016) 711-717), developed hybrid supercapacitors using electrodes made of an activated carbon paste or a carbon black paste deposited on a metallic mesh and a redox electrolyte based on para-benzoquinone (p-BQ) dissolved in the ionic liquid N-butyl-N-methylpyrrolidinium bis(-trifluoromethanesulfonyl) imide (PYR14TFSI). WO 2018/119044 A1 discloses supercapacitors relying on redox electrolytes, comprising e.g. hydroquinone, methyl viologen bromide, ferric cations and using electrodes comprising activate carbon in a current collector.

However, these hybrid systems present some drawbacks such as lower power density with rapid capacitance decay compared with electric double layer capacitors. In addition, the supercapacitors of Navalpotro et al. work at temperatures about 60°C due to the use of an ionic liquid in the electrolyte. Further, non-aqueous electrolytes can pose additional problems in terms of safety and eco-friendliness.

In this sense, there is still an ongoing need to develop hybrid storage systems with enhanced overall performance.

### BRIEF DESCRIPTION OF THE INVENTION

The authors of the present invention have developed a hybrid supercapacitor comprising at least one electrode consisting of a carbon felt and a carbon composition comprising activated carbon particles and an electrolyte comprising two different types of redox species, one in the catholyte and the other one in the anolyte, with better performance that other supercapacitors of the state of the art. The performance of the supercapacitor of the invention is significantly improved by the use of an electrode consisting of a carbon felt and a carbon composition comprising activated carbon particles. In addition, the authors have observed that the supercapacitor of the invention shows much better values of energy density and power density when using an electrolyte comprising a pair of redox species than with just one redox species or none redox species, in combination with the electrodes described above.

The present invention refers to a supercapacitor according to claim 1.

The invention further refers to an energy storage or delivery system according to claim 12, to a method for storing energy according to claim 13, a method for delivering electricity according to claim 14 and an use of a supercapacitor according to claim 15.

Embodiments of the invention are set forth with the dependent claims.

In particular,

a first aspect of the invention is directed to a supercapacitor comprising:

- two electrodes; wherein at least one of the electrodes consists of a carbon felt and a carbon composition comprising activated carbon particles; wherein the carbon composition is coating and impregnating the carbon felt;
- an electrolyte comprising: an anolyte comprising a first redox species and a catholyte comprising a second redox species; wherein the first and second redox species are different redox species; and wherein the second redox species is an organic or an organometallic compound;
- a separator; and
- means for connecting with a power/load source.

The supercapacitor of the present invention is configured to act as an energy storage and delivery system, i.e. it is configured to be reversibly charged and discharged. Therefore, in a second aspect, the present invention is directed to an energy storage system comprising at least a supercapacitor as defined above.

In addition, in a third aspect, the present invention is directed to a method for storing electricity comprising the steps of:

a) providing the supercapacitor of the present invention in any of its particular embodiments;
b) applying an electric voltage or current between the electrodes of the supercapacitor of step (a) to obtain an electrode with positive charge and another electrode with negative charge,
at the same time, oxidizing the redox species of the electrolyte to the corresponding oxidized state at the positive electrode while the redox active species of the electrolyte are reduced to the corresponding reduced state at the negative electrode; and
c) storing charge at the positive electrode and at the negative electrode.

In an additional aspect, the present invention is directed to a method for delivering electricity comprising the steps of:

a) providing the supercapacitor of the present invention in any of its particular embodiments; wherein one electrode has a positive charge and the other electrode has a negative charge;
b) generating an electric voltage or current between the electrodes by reducing the oxidized redox species of the electrolyte to the corresponding reduced state at the positive electrode while the reduced redox active species are oxidized to the corresponding oxidized state at the negative electrode; and
delivering the charge stored at the positive electrode and at the negative electrode.

Additional aspects of the present invention are directed to the use of the supercapacitor of the present invention in any of its particular embodiments or of the energy storage or delivery system of the present invention in any of its particular embodiments, to store or deliver energy.

**FIGURES**

Figure 1 shows the energy density values of (i) a supercapacitor with a non-redox electrolyte; (ii) a similar supercapacitor but with a redox electrolyte and having two electrodes with the same mass loading, and (iii) a similar supercapacitor as described above with redox electrolyte and having two electrodes with different mass loading.

Figure 2 shows a self-discharge graphic showing voltage (V) vs time (min) results of (i) a supercapacitor comprising two electrodes made of a graphite felt electrode coated and impregnated with a carbon composition, a separator and electrolyte having redox species; (ii) the same supercapacitor but with a non-redox electrolyte and (iii) a supercapacitor comprising stainless steel foils electrodes with the same carbon composition as used in the electrodes of (i).

Figure 3 shows discharge energy density versus current density (mA/cm$^2$) results of (i) a supercapacitor comprising two electrodes made of a graphite felt electrode coated and impregnated with a carbon composition, a separator and electrolyte having redox species; (ii) the same supercapacitor but with a non-redox electrolyte and (iii) a supercapacitor comprising stainless steel foils electrodes with the same carbon composition as used in the electrodes of (i) with redox electrolyte and (iv) without a redox electrolyte.

Figure 4 shows power density values versus current density for (i) a supercapacitor comprising two electrodes made of a graphite felt electrode coated and impregnated with a carbon composition, a separator and electrolyte having redox species; (ii) the same supercapacitor but with a non-redox electrolyte and (iii) a supercapacitor comprising stainless steel foils electrodes with the same carbon composition as used in the electrodes of (i), with redox electrolyte and (iv) without a redox electrolyte.

Figure 5 shows the voltage profile versus time results measured at 70 mA/cm$^2$ of the supercapacitor having one redox active species or no active redox species dissolved into the electrolyte.

Figure 6 shows a Ragone diagram wherein power density versus energy density results measured at 100, 70 and 50 mA/cm$^2$ of the supercapacitor having one redox active species or no active redox species dissolved into the electrolyte.

Figure 7 shows the voltage profile versus time results measured at 70 mA/cm$^2$ of the supercapacitor having two redox active species or no active redox species dissolved into the electrolyte.

Figure 8 shows a Ragone diagram wherein the power density versus energy density results measured at 100, 70 and 50 mA/cm$^2$ of the supercapacitor having two redox active species or no active redox species dissolved into the electrolyte.

Figure 9 shows a comparison of the energy density values measured at 50 mA/cm$^2$ for each type of electrolyte tested.

## DETAILED DESCRIPTION OF THE INVENTION

Unless defined otherwise, all technical and scientific terms used herein have the same meaning as commonly understood to one of ordinary skill in the art to which this disclosure belongs. As used herein, the singular forms "a" "an" and "the" include plural reference unless the context clearly dictates otherwise.

As defined above, in a first aspect, the present invention refers to a supercapacitor comprising:

- two electrodes; wherein at least one of the electrodes consists of a carbon felt and a carbon composition comprising activated carbon particles; wherein the carbon composition is coating and impregnating the carbon felt;
- an electrolyte comprising: an anolyte comprising a first redox species and a catholyte comprising a second redox species; wherein the first and second redox species are different redox species; and wherein the second redox species is an organic or an organometallic compound;
- a separator; and
- means for connecting with a power/load source.

*Electrodes*

At least one of the electrodes of the supercapacitor of the invention consists of a carbon felt and a carbon composition comprising activated carbon particles; wherein the carbon composition is coating and impregnating the carbon felt.

In an embodiment, both of the electrodes of the supercapacitor of the invention consist of a carbon felt and a carbon composition comprising activated carbon particles; wherein the carbon composition is coating and impregnating the carbon felt.

In a particular embodiment, the carbon composition is embedded in the carbon felt and is also coating the surfaces of the carbon felt.

In the context of the present invention, the term "activated carbon" refers to what is commonly understood in the art by said expression, it might be also called "activated charcoal". Activated carbon is usually porous and has high surface-area-to-volume ratio. In a particular embodiment, activated carbon is obtained from a chemical or physical activation process of carbonaceous material such as charcoal. In a more particular embodiment, the chemical activation process of the carbonaceous material comprises the steps of: i) mixing the carbonaceous material with a dehydrating agent such as an acid, and ii) heating at high temperatures to obtain activated carbon. In a more particular embodiment, the physical activation process of a carbonaceous material comprises the steps of: i) treating the carbonaceous material with a mixture of combustion gases and water vapor under heat to obtain activated carbon.

In a particular embodiment, the carbon felt is a graphite felt. In an embodiment, the carbon felt has a thickness of between 1 and 10 mm; preferably of between 2 and 8 mm; more preferably a thickness of about 2.5, 4.6 or 6 mm.

The carbon composition comprises activated carbon particles. In an embodiment, the activated carbon particles have a specific surface area of between 500 and 4000 m$^2$/g; more preferably of between 1500 and 3000 m$^2$/g; even much more preferably of between 2000 and 2600 m$^2$/g; even much more preferably of about 2400 m$^2$/g; wherein the specific area has been measured by a gas adsorption technique. In an embodiment, any gas adsorption technique known in the art is suitable for measuring the surface area of the activated carbon particles; non-limiting examples of gas adsorption techniques are dynamic flow gas adsorption technique or a volumetric gas adsorption technique applying Brunauer, Emmett and Teller (BET) adsorption isotherm.

In an embodiment, the activated carbon particles are in the carbon composition in at least a 60 wt% of the total weight of the carbon composition; preferably at least in a 65 wt%; more preferably in at least a 70 wt%.

In an embodiment, the activated carbon particles are in the carbon composition in between a 60 wt% and a 95 wt% of the total weight of the carbon composition; more preferably in between a 65 wt% and a 90 wt%; even more preferably in between a 70 wt% and a 85 wt%; even much more preferably about 80 wt%.

In a more particular embodiment, the carbon composition further comprises electrically conductive particles; preferably carbon-based electrically conductive particles; more preferably carbon-based electrically conductive particles selected from carbon black particles, graphene, carbon fibers, carbon nanotubes and mixtures thereof; even more preferably carbon black particles selected from acetylene carbon black particles, channel carbon black particles, furnace carbon black particles, lamp carbon black particles and thermal carbon black particles; even much more preferably acetylene carbon black particles.

In the context of the present invention, the expression "carbon black" refers to what is commonly understood in the art by said expression, i.e. a form of paracrystalline carbon that has a high surface-area-to-volume ratio, although lower than that of activated carbon.

In an embodiment, the electrically conductive particles are in the carbon composition in at least a 5 wt% of the total weight of the carbon composition; preferably at least in a 8 wt%; more preferably in at least a 9 wt%.

In an embodiment, the electrically conductive particles are in the carbon composition in between a 5 wt% and a 20wt% of the total weight of the carbon composition; more preferably in between a 8 wt% and a 18 wt%; even more preferably in between a 9wt% and a 15 wt%.

In a more particular embodiment, the carbon composition further comprises a binder; preferably a polymeric binder; more preferably a polyvinyl or a ethylene binder; even more preferably polyvinylidene fluoride or polytetrafluoroethylene (PTFE).

In an embodiment, the binder is in the carbon composition in at least a 5 wt% of the total weight of the carbon composition; preferably at least in a 8 wt%; more preferably in at least a 9wt%.

In an embodiment, the binder is in the carbon composition in between a 5 wt% and a 20 wt% of the total weight of the carbon composition; more preferably in between a 8 wt% and a 18 wt%; even more preferably in between a 9 wt% and a 15 wt%.

In an embodiment, the carbon composition consists of activated carbon particles, carbon black particles and a binder; preferably wherein the ratio of activated carbon particles, carbon black particles and binder is about 8:1:1.

The amount of carbon composition in the electrodes of the supercapacitor of the invention might be the same or different in each of the electrodes of the supercapacitor.

In an embodiment, when both of the electrodes of the supercapacitor of the invention consist of a carbon felt and a carbon composition comprising activated carbon particles; wherein the carbon composition is coating and impregnating the carbon felt, the amount of carbon composition is different in each of the electrodes.

In a particular embodiment, the amount of carbon composition is different in each of the electrodes of the supercapacitor of the invention; preferably one electrode has between a 10 and a 500% in weight more amount of carbon composition than the other electrode; preferably between a 50 and a 200% in weight more amount of carbon composition than the other electrode; more preferably between 80 and 150% in weight more amount of carbon composition than the other electrode; even much more preferably about 100% in weight more amount of carbon composition than the other electrode.

In an embodiment, the carbon composition is in one or in the two electrodes of the supercapacitor of the invention in an amount over 1 mg/cm$^2$; preferably over 10 mg/cm$^2$; more preferably over 15 mg/cm$^2$; even more preferably over 20 mg/cm$^2$; even much more preferably of about 25 mg/cm$^2$.

In an embodiment, the carbon composition is in one or in the two electrodes of the supercapacitor of the invention in an amount of between 1 and 100 mg/cm$^2$; preferably between 10 and 80 mg/cm$^2$; more preferably between 15 and 70; even much more preferably between 20 and 50 mg/cm$^2$; even much more preferably between 21 and 30 mg/cm$^2$; even much more preferably of between 22 and 26 mg/cm$^2$; particularly about 25 mg/cm$^2$.

In a particular embodiment, the at least one electrode of the supercapacitor of the invention has been obtained by the following method comprising the steps of

(i) providing

- a carbon felt; and
- a carbon slurry comprising at least a 60 wt% of the total weight of the carbon slurry of activated carbon particles;

(ii) coating and impregnating the carbon felt in the carbon slurry to obtain a carbon felt coated and impregnated with carbon slurry; and
(iii) heating the carbon felt with carbon slurry of step (i) at between 50 and 400 °C during between 1 and 10 h to obtain a carbon felt with a carbon composition.

In an embodiment, both of the electrodes of the supercapacitor of the invention have been obtained by the previous method.

In a particular embodiment, the carbon felt is a graphite felt.

In a more particular embodiment, the coating and impregnating of step (ii) of the previous method is performed by any coating and/or impregnation technique known in the art; preferably by spray coating or dip coating; more preferably by dip coating the carbon felt in the carbon slurry.

In a more particular embodiment, the carbon slurry comprises at least a 60 wt% of the total weight of the carbon slurry of activated carbon particles; at least a 5 wt% of carbon black particles; and a binder.

In a more particular embodiment, the carbon slurry further comprises a solvent; preferably an organic solvent; more preferably a polar organic solvent; even more preferably an alcohol; much more preferably isopropanol.

In a more particular embodiment, the carbon slurry consists of activated carbon particles; carbon black particles, a binder and a solvent.

In a more particular embodiment, the heating step (iii) is at between 80 and 300°C; preferably at between 100 and 200°C; more preferably at between 120 and 150°C.

In a more particular embodiment, the heating step (iii) is performed during between 2 and 8h; preferably between 3 and 7 h; more preferably about 4 h.

In a more particular embodiment, the carbon felt of step (i) is pretreated either by a heating step or by a chemically modifying step. In a more particular embodiment, the carbon felt of step (i) has been pretreated with a basic compound; preferably with a basic alkali compound; more preferably with NaOH.

In a more particular embodiment, the carbon felt of step (i) has been previously heated at between 200 and 600 °C during between 2 and 8 h; preferably between 300 and 500 °C during between 3 and 7 h; preferably between 350 and 450 °C during about 4 h.

In a particular embodiment, the electrodes of the supercapacitor of the invention are porous.

In a particular embodiment, the at least one of the electrodes of the supercapacitor of the invention consisting of a carbon felt and a carbon composition comprising activated carbon particles; wherein the carbon composition is coating and impregnating the carbon felt; has a surface area of between 200 and 1000 $m^2/g$, preferably of between 300 and 900 $m^2/g$, more preferably of between 400 and 800 $m^2/g$, even more preferably of about 600 $m^2/g$. In an embodiment, any gas adsorption technique known in the art is suitable for measuring the surface area of the at least one electrode; non-limiting examples of gas adsorption techniques are dynamic flow gas adsorption technique or a volumetric gas adsorption technique applying Brunauer, Emmett and Teller (BET) adsorption isotherm.

The authors of the present invention have observed that the use of the electrodes as described above in the supercapacitor of the present invention, lead to high values of power density. Moreover, the electrodes of the supercapacitor of the invention allow a facile flow of electronic charges and improve the interfacial properties between electrode and electrolyte.

*Electrolyte:*

The electrolyte of the supercapacitor of the invention comprises:

    i) an anolyte comprising a first redox species, and
    ii) a catholyte comprising a second redox species;

wherein the first and second redox species are different redox species; and wherein the second redox species is an organic or an organometallic compound.

In a particular embodiment, the electrolyte consists of an anolyte comprising a first redox species and a catholyte comprising a second redox species.

In a more particular embodiment, the catholyte and the anolyte are not in physical contact with each other.

In an alternative embodiment, the catholyte and the anolyte are in fluidic communication through the separator; preferably only some species of the anolyte and/or the catholyte are able to pass the separator.

In the context of the present invention the expression "redox species" is understood as "redox active species". In the context of the present invention the terms "first" and "second" directed to the redox species, are used for the identification of different types of redox species, for example they could be substituted by the expressions "redox species A" and "redox species B".

In an embodiment, the catholyte is in contact with one electrode of the supercapacitor, such as the cathode, and the anolyte is in contact with the other electrode of the supercapacitor, such as the anode.

In an embodiment, the separator is placed in the supercapacitor between the anolyte and the catholyte. In an embodiment, the anolyte and the catholyte are separated by the separator of the supercapacitor. In a particular embodiment, the separator comprises two opposite sides, and the anolyte is in contact with one side of the separator and the catholyte is in contact with the opposite side of the separator.

In a particular embodiment, the catholyte and the anolyte have a different composition. In an embodiment, the first redox species is in the anolyte and the second redox species is in the catholyte. In a more particular embodiment, the anolyte only has one type of redox species that is the first redox species. In another particular embodiment, the catholyte only has one type of redox species that is the second redox species.

In a more particular embodiment, the anolyte consists of water, a salt and a first redox species. In an even more particular embodiment, the catholyte consists of water, a salt and a second redox species.

*Redox species*

In an embodiment, the first redox species is an organic compound. In a particular embodiment, the first redox species is an organic compound comprising a heteroaryl group; preferably an heteroaryl group having a nitrogen atom; such as a pyridyl group.

In a more particular embodiment, the first redox species is an organic compound comprising a pyridyl group; preferably comprising two pyridyl groups.

The terms "heteroaryl" and "heteroar-", used alone or as part of a larger moiety, e.g., heteroaralkyl, or "heteroaralkoxy", refer to groups having 5 to 14 ring atoms, preferably 5, 6, 9, or 10 ring atoms; having 6, 10, or 14 $\pi$ electrons shared in a cyclic array; and having, in addition to carbon atoms, from one to four heteroatoms. The term "heteroatom" refers to nitrogen, oxygen, or sulfur, and includes any oxidized form of nitrogen or sulfur, and any quaternized form of a basic nitrogen. Thus, when used in reference to a ring atom of a heteroaryl, the term "nitrogen" includes an oxidized nitrogen (as in pyridine N-oxide). Certain nitrogen atoms of heteroaryl groups also are substitutable, as further defined below. Heteroaryl groups include, without limitation, thienyl, furanyl, pyrrolyl, imidazolyl, pyrazolyl, triazolyl, tetrazolyl, oxazolyl, isoxazolyl, oxadiazolyl, thiazolyl, isothiazolyl, thiadiazolyl, pyridyl, pyridazinyl, pyrimidinyl, pyrazinyl, indolizinyl, purinyl, naphthyridinyl, and pteridinyl.

In some embodiments, two adjacent substituents on a heteroaryl ring, taken together with the intervening ring atoms, form an optionally substituted fused 5- to 6-membered aromatic or 4- to 6- membered non-aromatic ring having 0-3 ring heteroatoms selected from the group consisting of O, N, and S. Thus, the terms "heteroaryl" and "heteroar-", as used herein, also include groups in which a heteroaromatic ring is fused to one or more aryl, cycloaliphatic, or heterocyclyl rings, where the radical or point of attachment is on the heteroaromatic ring. Nonlimiting examples include indolyl, isoindolyl, benzothienyl, benzofuranyl, dibenzofuranyl, indazolyl, benzimidazolyl, benzthiazolyl, quinolyl, isoquinolyl, cinnolinyl, phthalazinyl, quinazolinyl, quinoxalinyl, 4H-quinolizinyl, carbazolyl, acridinyl, phenazinyl, phenothiazinyl, phenoxazinyl, tetrahydroquinolinyl, tetrahydroisoquinolinyl, and pyrido[2,3-b]-1,4-oxazin-3(4H)-one. A heteroaryl group may be mono-, bi-, tri-, or polycyclic, preferably mono-, bi-, or tricyclic, more preferably mono- or bicyclic. The term "heteroaryl" may be used interchangeably with the terms "heteroaryl ring", or "heteroaryl group", any of which terms include rings that are optionally substituted. The term "heteroaralkyl" refers to an alkyl group substituted by a heteroaryl, wherein the alkyl and heteroaryl portions independently are optionally substituted.

In a particular embodiment, the first redox species is selected from diquat compounds such as 2,2'-bipyridylium; viologen compounds such as methyl viologen dichloride or 1,1' -bis(3-sulfonatopropyl)-4,4' -bipyridinium; and mixtures thereof.

In the context of the present invention a "diquat compound" is understood as commonly known in the art as 2,2'-bipyridylium (diquat) compounds, substituted 2,2'-bipyridylium compounds; derivatives of 2,2'-bipyridylium or salts thereof. A non-limiting example of a "diquat compound" is a 2,2'-bipyridylium salt.

In the context of the present invention a "viologen compound" is understood as commonly known in the art as 4,4'-bipyridinium compounds, substituted 4,4'-bipyridinium compounds, derivatives of 4,4'-bipyridinium compounds or salts thereof.

Non-limiting examples of viologen compounds are heptyl viologen dibromide (HVBr$_2$), methyl viologen dichloride (MVCl$_2$), methyl viologen dibromide (MVBr$_2$), 1,1' -bis(3-sulfonatopropyl)-4,4' -bipyridinium, 1,1'-bis(3-hydroxypropyl) viologen; 1,1'-bis(2-hydroxyethyl) viologen, 1,1'-bis(6-hydroxyhexyl) viologen, 1,1'-bis(3-phosphonopropyl)-[4,4'- bipyridine]-1,1'-diium, bis-(trimethylammonio) propyl viologen and mixtures thereof.

In a particular embodiment, the viologen compound of the present invention is an alkylated viologen; preferably a C$_1$-C$_{10}$ alkyl viologen; more preferably an heptyl or methyl viologen (MV); even more preferably a methyl viologen salt selected from methyl viologen dichloride and methyl viologen dibromide.

In a particular embodiment, the viologen compound of the present invention is an alkyl substituted 4,4'-bipyridinium compound; preferably is a methyl viologen; more preferably is methyl viologen dichloride.

The term "alkyl" refers to a linear or branched alkane derivative containing from 1 to 10 ("C$_1$-C$_{10}$ alkyl"), preferably from 1 to 3 ("C$_1$-C$_3$ alkyl"), carbon atoms and which is bound to the rest of the molecule through a single bond. Illustrative examples of alkyl groups include methyl, ethyl, n-propyl, i-propyl, n-butyl, i-butyl, t-butyl, pentyl, hexyl, heptyl.

Preferably, it is methyl or ethyl. The term "alkylated" refers to a compound comprising alkyl groups.

In a more particular embodiment, the viologen compound of the present invention is a methyl viologen dichloride or a 1,1' -bis(3-sulfonatopropyl)-4,4' -bipyridinium.

The second redox species of the invention is an organic or an organometallic compound; particularly wherein said organic or organometallic compound is different from the first redox species. In an embodiment, the organometallic compound comprises iron.

In a more particular embodiment, the second redox species is selected from the group consisting of tetramethylpiperidine (TEMPO) compounds, ferrocene compounds, hydroquinone compounds and mixtures thereof.

In a more particular embodiment, the second redox species is selected from the group consisting of 4-hydroxy-2,2,6,6-tetramethylpiperidin-1-oxyl, (ferrocenylmethyl)trimethylammonium chloride, hydroquinone and mixtures thereof.

In a particular embodiment, the first redox species is an organic compound comprising a heteroaryl group; preferably an heteroaryl group having a nitrogen atom; such as a pyridyl group; and

the second redox species is selected from the group consisting of tetramethylpiperidine (TEMPO) compounds, ferrocene compounds, hydroquinone compounds and mixtures thereof.

In a particular embodiment, the first redox species is selected from diquat compounds, viologen compounds and mixtures thereof; and

the second redox species is selected from the group consisting of tetramethylpiperidine (TEMPO) compounds, ferrocene compounds, hydroquinone compounds and mixtures thereof.

In a particular embodiment, the first redox species is selected from diquat compounds, viologen compounds and mixtures thereof; and

the second redox species is selected from the group consisting of 4-hydroxy-2,2,6,6-tetramethylpiperidin-1-oxyl, (ferrocenylmethyl)trimethylammonium chloride, hydroquinone and mixtures thereof.

In a more particular embodiment, the first redox species is selected from a methyl viologen dichloride or a 1,1'-bis(3-sulfonatopropyl)-4,4'-bipyridinium; and the second redox species is selected from the group consisting of 4-hydroxy-2,2,6,6-tetramethylpiperidin-1-oxyl, (ferrocenylmethyl)trimethylammonium chloride, hydroquinone and mixtures thereof.

In an embodiment, the electrolyte, such as the anolyte and the catholyte, of the supercapacitor further comprises a salt such as sodium sulfate or potassium chloride; or a hydroxide such as potassium hydroxide; more preferably a sulfate salt; more preferably sodium sulfate.

In an embodiment, the concentration of the redox species in the electrolyte, such as in the anolyte and the catholyte, is between 1 and 20 times less than the concentration of salt; preferably is between 5 and 15 times less; more preferably between 8 and 12 times less; more preferably is about 10 times less.

In an embodiment, the electrolyte, such as the anolyte and the catholyte, of the supercapacitor further comprises a solvent. In a particular embodiment, the electrolyte of the supercapacitor further comprises a polar solvent; more preferably water. In a particular embodiment, the electrolyte of the supercapacitor further comprises an organic solvent; preferably acetonitrile. In another particular embodiment, the electrolyte of the supercapacitor, such as the anolyte and the catholyte, further comprises an ionic liquid such as N,N-butylmethylpyrrolidinium bis(trifluoromethanesulfonyl)imide (PYR14TFSI) alone or as a mixture with an organic sovent

In a more particular embodiment, the electrolyte such as the anolyte and the catholyte, of the supercapacitor further comprises a carbonate; particularly, wherein the carbonate acts as a solvent.

In a more particular embodiment, the anolyte consists of a carbonate, a salt and a first redox species. In an even more particular embodiment, the catholyte consist of a carbonate, a salt and a second redox species.

Non-limiting examples of carbonates suitable for the electrolyte (anolyte and/or catholyte) of the invention are alkylcarbonates such as dimethylcarbonate, ethylmethylcarbonate or a mixture thereof.

*Separator*

The supercapacitor of the invention further comprises a separator. Any separator known in the art related to supercapacitors may be used in the present invention.

In a particular embodiment, the separator is made of an electrically insulating material. Non-limiting materials suitable for the separator are insulating polymers such as polycarbonate or polypropylene, cellulose based materials such as paper, etc.

In a particular embodiment, the separator is an ion exchange membrane; preferably a polymeric ion exchange membrane such as Nafion™ perfluorinated membrane, or a selemion hydrocarbon-based ion-exchange membrane.

In a more particular embodiment, the separator comprises a cellulosic material; preferably a paper sheet. In a more particular embodiment, the separator is a paper sheet that has been previously soaked in the electrolyte.

The supercapacitor of the present invention comprises means adapted for connecting with a power/load source, such as electric connections, for example, electric wires.

The supercapacitor of the present invention comprises means adapted for connecting the electrodes with a power/load source; preferably each of the electrodes with a power/load source.

In an embodiment, the power/load source is any external electrical device such as an electrical grid, an electric vehicle, a domestic appliance or a sensor, that draws/transfers energy from/to the supercapacitor. In general, the power/load source have controllable voltages and/or current supplies or uptakes.

In an embodiment, the supercapacitor of the invention further comprises current collectors; preferably current collectors in electrical contact with the electrodes. In a more particular embodiment, the current collectors are made of a electrically conductive material.

In an embodiment, the supercapacitor of the invention comprises:

- two electrodes; wherein at least one of the electrodes consists of a carbon felt and a carbon composition comprising activated carbon particles; wherein the carbon composition is coating and impregnating the carbon felt
- an electrolyte comprising: an anolyte comprising a first redox species and a a catholyte comprising a second redox species; wherein the first and second redox species are different redox species; and wherein the second redox species is an organic or an organometallic compound;
- a separator;
- means adapted for connecting with a power/load source; and
- optionally, current collectors.

In a more particular embodiment, the supercapacitor of the invention consists of:

- two electrodes; wherein at least one of the electrodes consists of a carbon felt and a carbon composition comprising activated carbon particles; wherein the carbon composition is coating and impregnating the carbon felt
- an electrolyte comprising: an anolyte comprising a first redox species and a a catholyte comprising a second redox species; wherein the first and second redox species are different redox species; and wherein the second redox species is an organic or an organometallic compound;
- a separator;
- means adapted for connecting with a power/load source; and
- optionally, current collectors.

In an embodiment, the electrodes in the supercapacitor are facing each other; preferably are parallel.

In an embodiment, the separator is between the two electrodes of the supercapacitor of the invention.

In a particular embodiment, the separator comprises two opposite sides and each of the electrodes of the supercapacitor is in contact with one opposite side of the separator.

In a more particular embodiment, the electrodes are embedded in the electrolyte; for example, one electrode is embedded in the catholyte and the other electrode is embedded in the anolyte.

In a more particular embodiment, the separator separates the catholyte and the anolyte.

The supercapacitor may be in any shape, such as button-shaped (i.e. substantially flat and round or oval surface), rectangular, cylindrical or prismatic.

In an embodiment, the supercapacitor is comprised within a housing such a case.

The authors have observed that the supercapacitor of the invention had a better performance when the electrolyte has at least one redox species than when the electrolyte has none redox active species. Surprisingly, the performance of the supercapacitor of the present invention was significantly improved when two different redox species were used in the electrolyte and, more particularly, when one of said redox species is a viologen compound.

*Energy storage system*

Therefore, in a second aspect, the present invention is directed to an energy storage system comprising at least one supercapacitor as defined above in any of their particular embodiments; preferably, at least two supercapacitors.

*Methods*

In addition, in a third aspect, the present invention is directed to a method for storing electricity comprising the steps of:

a) providing the supercapacitor of the invention in any of their particular embodiments;
b) applying an electric voltage or current between the two electrodes of the supercapacitor of step (a) to obtain an electrode with positive charge and the other electrode with negative charge,

at the same time, oxidizing the redox species of the electrolyte to the corresponding oxidized state at the positive electrode while the redox active species of the electrolyte are reduced to the corresponding reduced state at the negative electrode; and
storing charge at the positive electrode and at the negative electrode.

In an embodiment, step (b) comprises applying an electric current; preferably an electric constant current.

In a particular embodiment, the charge is stored by faradaic reactions and double layer mechanisms as known in the art.

In an additional aspect, the present invention is directed to a method for delivering electricity comprising the steps of:

a) providing the supercapacitor of the present invention in any of its particular embodiments; wherein one electrode has a positive charge and the other electrode has a negative charge;

b) generating an electric voltage or current between the electrodes by reducing the oxidized redox species of the electrolyte to the corresponding reduced state at the positive electrode while the reduced redox active species are oxidized to the corresponding oxidized state at the negative electrode; and

c) delivering the charge stored at the positive electrode and at the negative electrode.

In an embodiment, step b comprises applying an electric current; preferably an electric constant current.

The working conditions of the supercapacitor of the present invention can be adjusted depending on the final application to increase the driving force of charge transfer during charging process or discharging process.

*Uses*

Additional aspects of the present invention are directed to the use of the supercapacitor as defined above in any of its particular embodiments or of the energy storage or delivery system defined above to store or deliver energy, particularly, in the renewable energy and electromobility sectors.

An aspect of the invention is directed to a method for storing or delivering energy comprising using the supercapacitor of the invention as defined in any of the particular embodiments.

To this end, the supercapacitor of the present invention may be used individually or in combination with other energy storage technologies (e.g., batteries, etc.) and may be integrated into or with various systems and/or devices to improve efficiency, address energy demands, etc.

Furthermore, the supercapacitor of the invention may be used in a variety of applications having different energy delivery and/or storage needs, including, but not limited to, very large scale applications (e.g., utilities, functioning as a green energy source for a smart grid, energy storage for use in combination with renewable energy resources such as wind and solar power, etc.) and smaller applications (e.g. backup power, residential power, electromobility sector, etc.).

The present invention will be described in further detail with reference to the following examples. These examples are for illustrative purposes only and are not intended to limit the scope of the present invention.

## EXAMPLES

### EXAMPLE 1 - Supercapacitor cell preparation

A supercapacitor cell was prepared comprising two electrodes, a separator and an electrolyte, wherein the electrodes are made of a graphite felt electrode coated and impregnated with a carbon composition. The separator was a cellulosic paper impregnated with electrolyte located between the two electrodes. The electrodes were prepared as follows:

A carbon slurry was prepared in a ball mill with 80 wt% activated carbon (PICACTIF SuperCap BP10 type, PICA France, specific surface area = 2400 $m^2$ $g^{-1}$, hereinafter AC), and 10 wt% carbon black (acetylene, 100% compressed, >99.9%, Alfa Aesar), 10 wt% polyvinylidene fluoride (PVDF, MTI) and isopropanol as a dispersive medium. The carbon slurry was then mixed and homogenized for 30 min at 400 rpm.

Graphite felts (GFD-grade, SGL carbon, Germany, hereinafter GFs) with different thicknesses (2.5, 4.6, and 6.0 mm) were used as a support for the carbon slurry. As received, GFs were activated for 4 h at 400 °C in a furnace. Next, these GFs were cut into pieces 1.2$cm^2$ with circular shape and immersed in the AC carbon slurry by dip coating. Subsequently, the GF-AC electrodes were heated in a vacuum furnace at 140 °C for 4 h (hereinafter GF-ACx, where $\times$ is the GF thickness). The average mass loading of GF-AC2.5, was 25 mg of AC $cm^{-2}$ for both electrodes. In addition two electrodes having a different mass loading (one with a 25 mg of AC $cm^{-2}$ and the other one with 50 mg of AC $cm^{-2}$) were tested in the supercapacitor.

Different aqueous redox electrolytes were prepared to be used in the supercapacitor. Each type of electrolyte was prepared by dissolving the corresponding mass of supporting salt and none or one redox active species into a solvent for achieving a specific concentration.

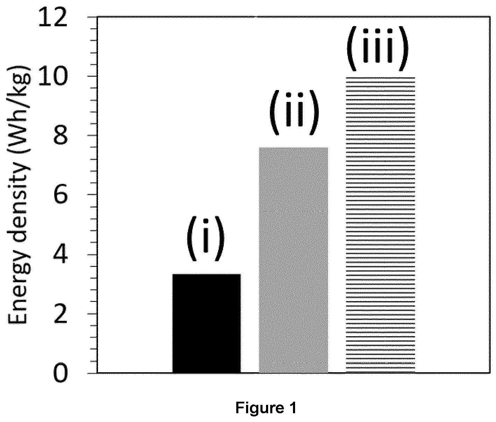

Figure 1 shows the energy density results of (i) the supercapacitor as described above with a non-redox electrolyte; (ii) the supercapacitor as described above with redox electrolyte and having two electrodes with the same mass loading, and (iii) the supercapacitor as described above with redox electrolyte and having two electrodes with the different mass loading. Results showed greater values for the energy density of the supercapacitor as described above with a redox electrolyte that for the supercapacitors with an electrolyte without redox species. In addition, better results were obtained for the supercapacitor when the electrodes have a different mass loading.

## EXAMPLE 2 - Supercapacitor cell performance against other supercapacitor cells

The properties of the supercapacitor cell as described on EXAMPLE 1 using a redox electrolyte has been tested against a similar supercapacitor using non-redox electrolyte and against a supercapacitor comprising the same redox electrolyte but wherein the electrodes are made using the same carbon slurry as described in Example 1 but using stainless steel foils instead of graphite felts as supporting material. The redox electrolyte was an aqueous solution of a salt and containing one redox species and the non-redox electrolyte solution was an aqueous solution of a salt without redox species.

Galvanostatic charge-discharge (CD) testing was performed on the supercapacitors. Data was obtained from CD experiments over a range in voltage 0 to 1.2V and a temperature of 20°C.

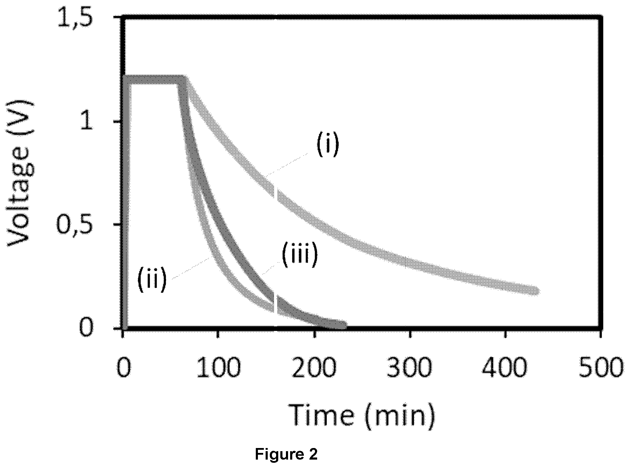

Figure 2 shows a self-discharge graphic showing voltage (V) vs time (min) results of the (i) supercapacitor as described on Example 1 with redox electrolyte, (ii) the supercapacitor as described on Example 1 but with a non-redox electrolyte and (iii) a supercapacitor comprising stainless steel foils electrodes with a carbon composition as described above. Results showed reduced self-discharge values in the supercapacitor as described on Example 1 that in the other supercapacitors.

In addition, discharge energy density and power density versus current density were measured for the different supercapacitors. The discharge energy density ($E_{real}$) and power density ($P_{real}$) values were calculated applying the equations 1 y 2 showed below:

$$E_{\text{real}} = \frac{1}{m} \int_{t_i}^{t_f} I \cdot V \cdot dt \qquad (1)$$

$$P_{real} = \frac{E_{real}}{t_{discharge}} \qquad (2)$$

Wherein m is the mass loading of the electrode, I is the applied current, V is the voltage, $t_i$ represents the time at which the discharge starts and $t_f$ the time at which the discharges ends, respectively; $t_{discharge}$ is the total time that the supercapacitor discharge lasts at the applied current.

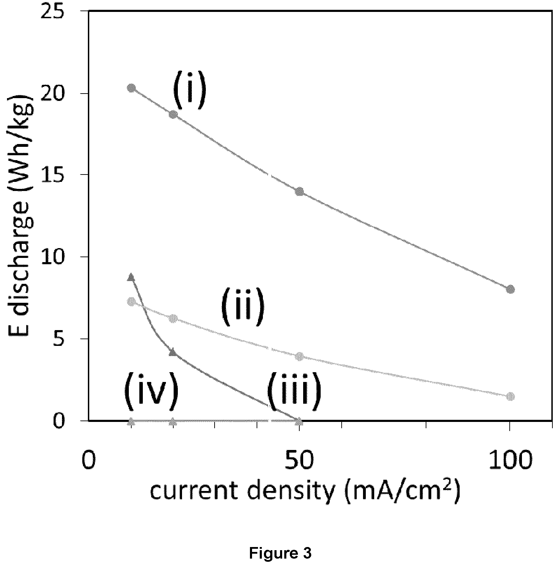

Figure 3 shows discharge energy density versus current density for the (i) supercapacitor as described on Example 1 with redox electrolyte, (ii) supercapacitor as described on Example 1 without a redox electrolyte (non-redox electrolyte) and for the supercapacitor comprising stainless steel foils electrodes with a carbon composition as described above (iii) with redox electrolyte and (iv) without a redox electrolyte. Results showed greater values for the energy density of the supercapacitor as described on Example 1 with redox electrolyte that for the other supercapacitors.

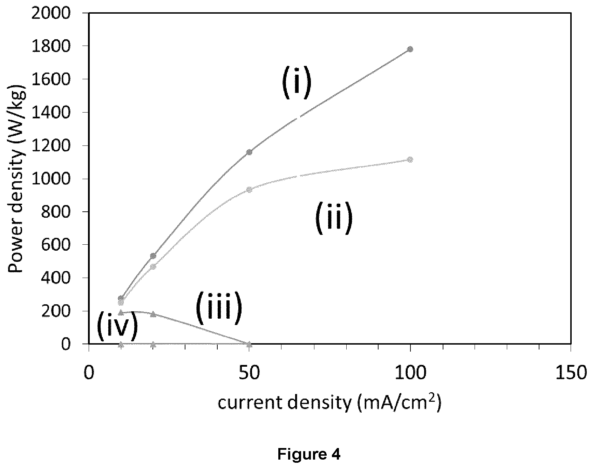

Figure 4 shows power density values versus current density for the (i) supercapacitor as described on Example 1 with redox electrolyte, (ii) supercapacitor as described on Example 1 without a redox electrolyte and for the supercapacitor comprising stainless steel foil electrodes with a carbon composition (iii) with redox electrolyte and (iv) without a redox electrolyte. Results showed greater values for the power density of the supercapacitor as described on Example 1 with redox electrolyte that for the other supercapacitors.

## EXAMPLE 3 - Supercapacitor cell performance with different electrolytes

The properties of the supercapacitor cell as described on EXAMPLE 1 has been tested using different redox electrolytes.

Different aqueous redox electrolytes were prepared to be used with the supercapacitor. Each type of electrolyte was prepared by dissolving the corresponding mass of supporting salt and redox active species into a solvent (water) for achieving a specific concentration.

In particular, the electrolytes used were an aqueous solution of 1M $Na_2SO_4$ with one, with two types of dissolved redox active species or without any redox active species (namely no-redox electrolyte).

The redox active species dissolved into the electrolytes tested were:

- methyl viologen dichloride (named as MV);

- 1,1' -bis(3-sulfonatopropyl)-4,4' -bipyridinium (also named as (SPr)2V)

- (ferrocenylmethyl)trimethylammonium chloride (named as FcNCl);

- 4-hydroxy-2,2,6,6-tetramethylpiperidin-1-oxyl (named as OHTEMPO);

- hydroquinone (named as $H_2Q$).

The typical concentration of each redox active species in the electrolyte is 0.1M.

When just one redox species was used in the electrolyte, the composition of each of the catholyte and the anolyte in the supercapacitor was (i) the same aqueous solution of 1M $Na_2SO_4$ comprising one redox species or (ii) in one of the anolyte or catholyte an aqueous solution of 1M $Na_2SO_4$ and, in the other one, the same aqueous solution but having a redox species.

The active redox pairs of species tested in the supercapacitor were: MV+ OHTEMPO, MV+ FcNCl, MV + $H_2Q$, ((SPr)2V)+ OHTEMPO, ((SPr)2V)+ FcNCl and ((SPr)2V) + $H_2Q$.

When a pair of redox species was used in the electrolyte, the composition of each of the catholyte and the anolyte in the supercapacitor was an aqueous solution of 1M $Na_2SO_4$ comprising one redox species, however, the redox species in the catholyte was different to the one in the anolyte. In particular, the anolyte composition was an aqueous solution of 1M $Na_2SO_4$ comprising an organic redox compound comprising a heteroaryl group having a nitrogen atom such as MV or ((SPr)2V. Moreover, the catholyte composition was an aqueous solution of 1M $Na_2SO_4$ comprising a redox species selected from FcNCl, OHTEMPO or $H_2Q$.

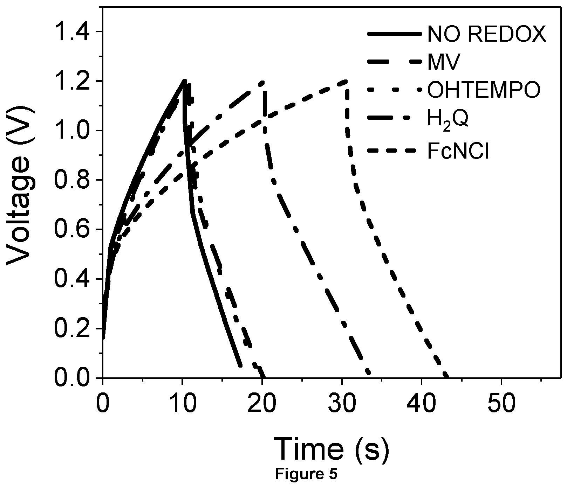

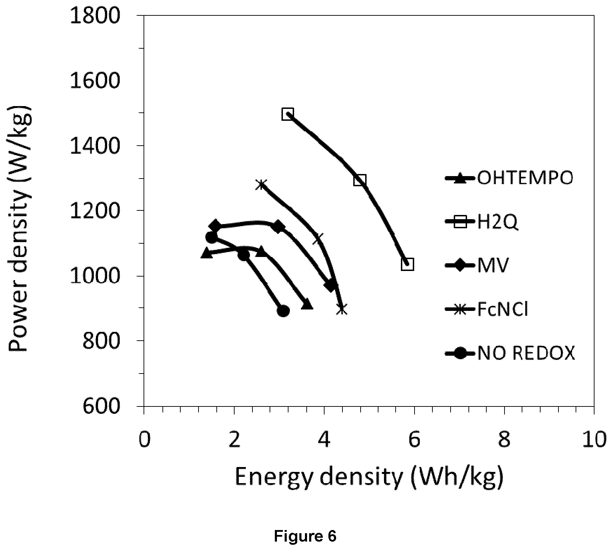

Figure 5 shows the voltage profile versus time results measured at 70 mA/cm$^2$ of the supercapacitor having one redox active species or no active redox species dissolved into the electrolyte. Figure 6 shows a Ragone diagram wherein power density versus energy density results measured at 100, 70 and 50 mA/cm$^2$ of the supercapacitor having one redox active species or no active redox species dissolved into the electrolyte. The active redox species tested were MV, FcNCl, OHTEMPO, $H_2Q$.

Results of Figure 5 and 6 showed that the supercapacitor had a better performance when the electrolyte has a redox active species than when the electrolyte has none redox active species.

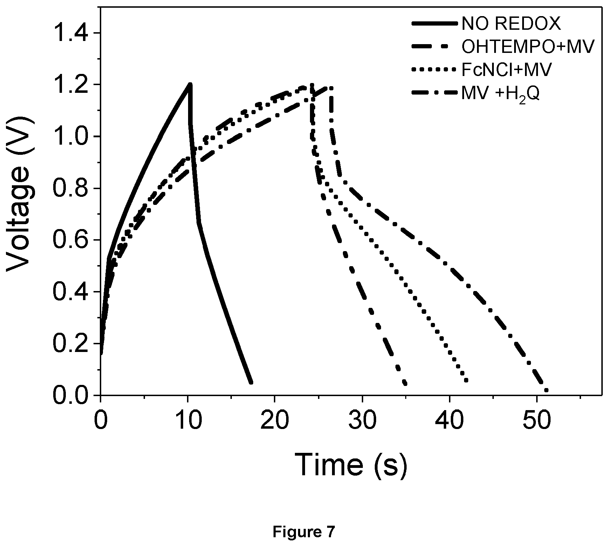

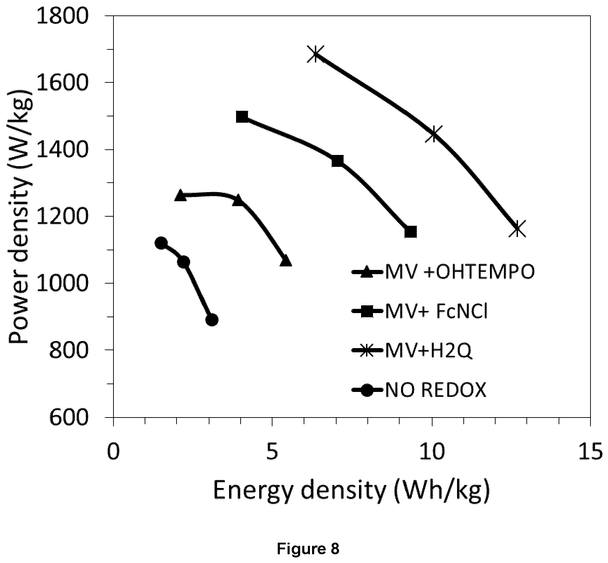

Figure 7 shows the voltage profile versus time results measured at 70 mA/cm$^2$ of the supercapacitor having two redox active species or no active redox species dissolved into the electrolyte. Figure 8 shows a Ragone diagram wherein the power density versus energy density results measured at 100, 70 and 50 mA/cm$^2$ of the supercapacitor having two redox active species or no active redox species dissolved into the electrolyte. The active redox species pairs tested were MV+ OHTEMPO, MV+ FcNCl, and MV + $H_2Q$.

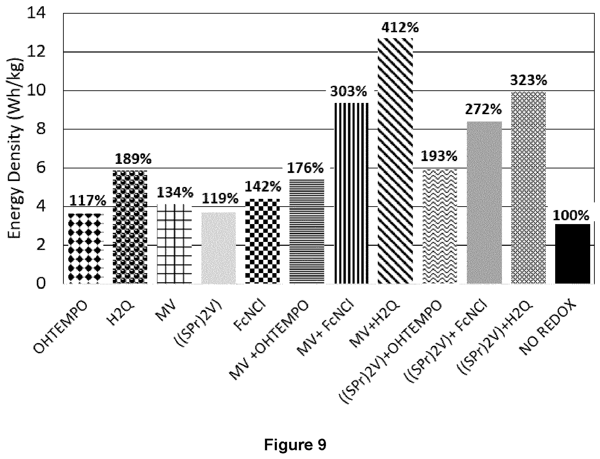

Figure 9 shows a comparison of the Energy density values measured at 50 mA/cm$^2$ for each type of electrolyte tested. In figure 8, the % of the energy density value obtained for the different electrolytes is expressed with respect to the value obtained without any redox active species which is considered as 100%. The active redox species tested were OHTEMPO, $H_2Q$, MV, ((SPr)2V), FcNCl and the active redox species pairs tested were MV+ OHTEMPO, MV+ FcNCl, MV + $H_2Q$, ((SPr)2V)+ OHTEMPO, ((SPr)2V)+ FcNCl and ((SPr)2V) + $H_2Q$. When a pair of active redox species was tested, the anolyte and the catholyte had a different redox species and the anolyte comprised either MV or ((SPr)2V).

The authors have observed that the supercapacitor of Example 1 had a better performance when the electrolyte has at least one redox active species than when the electrolyte has none redox active species. Surprisingly, Figure 9 results showed the supercapacitor performance is significantly improved when a pair of redox active species is used in the electrolyte. Results of figure 9 show a significant and unexpected increase in the energy density values of the supercapacitor when a pair of redox active species is used in the electrolyte in comparison with the use of just one redox active species in the electrolyte.

**Claims**

1.   A supercapacitor comprising:

- two electrodes; wherein at least one of the electrodes consists of a carbon felt and a carbon composition comprising activated carbon particles; wherein the carbon composition is coating and impregnating the carbon felt;
- an electrolyte comprising: an anolyte comprising a first redox species and a catholyte comprising a second redox species; wherein the first and second redox species are different redox species; and wherein the second redox species is an organic or an organometallic compound;
- a separator; and

- means adapted for connecting with a power/load source.

2. The supercapacitor according to claim 1, wherein the second redox species is selected from the group consisting of tetramethylpiperidine (TEMPO) compounds, ferrocene compounds, hydroquinone compounds and mixtures thereof.

3. The supercapacitor according to claim 1 or 2, wherein the first redox species is an organic compound comprising a heteroaryl group having a nitrogen atom; preferably a pyridyl group; preferably wherein the first redox species is selected from diquat compounds, viologen compounds and mixtures thereof.

4. The supercapacitor according to any of claims 1 to 3, wherein the second redox species is selected from the group consisting of 4-hydroxy-2,2,6,6-tetramethylpiperidin-1-oxyl, (ferrocenylmethyl)trimethylammonium chloride, hydroquinone and mixtures thereof.

5. The supercapacitor according to any of claims 1 to 4, wherein the first redox species is selected from diquat compounds, viologen compounds and mixtures thereof; and
wherein the second redox species is selected from the group consisting of tetramethylpiperidine (TEMPO) compounds, ferrocene compounds, hydroquinone compounds and mixtures thereof.

6. The supercapacitor according to any of claims 1 to 5, wherein the first redox species is selected from methyl viologen dichloride or a 1,1' -bis(3-sulfonatopropyl)-4,4' -bipyridinium; and
wherein the second redox species is selected from 4-hydroxy-2,2,6,6-tetramethylpiperidin-1-oxyl, (ferrocenylmethyl) trimethylammonium chloride, hydroquinone and mixtures thereof.

7. The supercapacitor according to any of claims 1 to 6, wherein each of the two electrodes of the supercapacitor consists of a carbon felt and a carbon composition comprising activated carbon particles; and
wherein the carbon composition is in a different amount in each of the electrodes; preferably in an amount over 1 mg/cm$^2$.

8. The supercapacitor according to any of claims 1 to 7,

wherein the activated carbon particles are in the carbon composition in at least a 60 wt% of the total weight of the carbon composition and wherein the carbon composition further comprises carbon black particles in at least a 5 wt%;
and/or,
wherein the carbon felt is a graphite felt.

9. The supercapacitor according to any of claims 1 to 8, wherein the at least one electrode has been obtained by a method comprising the following steps

(i) providing

a. a graphite felt; and
b. a carbon slurry comprising at least a 60 wt% of the total weight of the carbon slurry of activated carbon particles and at least a 5 wt% of carbon black particles;

(ii) coating and impregnating the graphite felt with the carbon slurry to obtain a graphite felt coated and impregnated with carbon slurry; and
(iii) heating the graphite felt with carbon slurry of step (i) at between 50 and 400°C during between 1 and 10 h to obtain a graphite felt with a carbon composition.

10. The supercapacitor according to any of claims 1 to 9, wherein the catholyte and/or the anolyte further comprises a salt and a polar solvent such as water.

11. The supercapacitor according to any of claims 1 to 10, comprising:

- two electrodes, wherein each of the two electrodes consists of

∘ a graphite felt, and

◦ a carbon composition consisting of

- activated carbon particles being in at least a 60 wt% of the total weight of the carbon composition,
- carbon black particles and
- a binder;

wherein the carbon composition is coating and impregnating the carbon felt;

- an electrolyte comprising:

◦ an anolyte comprising a first redox species, and
◦ a catholyte comprising a second redox species;
wherein the first and second redox species are different redox species; wherein the second redox species is an organic or an organometallic compound; preferably wherein the second redox species is selected from the group consisting of 4-hydroxy-2,2,6,6-tetramethylpiperidin-1-oxyl, (ferrocenylmethyl)trimethylammonium chloride, hydroquinone and mixtures thereof;
wherein the first redox species is an organic compound comprising a pyridyl group; preferably wherein the first redox species is selected from diquat compounds, viologen compounds and mixtures thereof;

- a separator; and
- means adapted for connecting with a power/load source.

12. An energy storage or delivery system comprising one or more supercapacitor according to any of claims 1 to 11.

13. A method for storing electricity comprising the steps of:

a) providing a supercapacitor according to any of claims 1 to 11,
b) applying an electric voltage or current between the electrodes of the supercapacitor of step (a) to obtain an electrode with positive charge and the other electrode with negative charge,
at the same time, oxidizing the redox species of the electrolyte to the corresponding oxidized state at the positive electrode while the redox active species of the electrolyte are reduced to the corresponding reduced state at the negative electrode; and
c) storing charge at the positive electrode and at the negative electrode.

14. A method for delivering electricity comprising the steps of:

a) providing a supercapacitor according to any of claims 1 to 11; wherein one electrode has a positive charge and the other electrode has a negative charge;
b) generating an electric voltage or current between the electrodes by reducing the oxidized redox species of the electrolyte to the corresponding reduced state at the positive electrode while the reduced redox active species are oxidized to the corresponding oxidized state at the negative electrode; and
delivering the charge stored at the positive electrode and at the negative electrode.

15. Use of the supercapacitor according to any of claims 1 to 11 or of the energy storage or delivery system according to claim 12 to store or deliver electricity.

**Patentansprüche**

1. Superkondensator, umfassend:

- zwei Elektroden; wobei wenigstens eine der zwei Elektroden aus einem Kohlenstofffilz und einer Kohlenstoffzusammensetzung besteht, welche Aktivkohlepartikel umfasst; wobei die Kohlenstoffzusammensetzung den Kohlenstofffilz beschichtet und imprägniert;
- einen Elektrolyten, umfassend: einen Anolyt, welcher eine erste Redoxspezies umfasst, und einen Katholyt, welcher eine zweite Redoxspezies umfasst; wobei die erste und zweite Redoxspezies unterschiedliche Redoxspiezies sind; und wobei die zweite Redoxspezies eine organische oder eine metallorganische Verbindung ist;
- einen Separator; und

- Mittel, welche zu einem Verbinden mit einer Leistungs-/Lastquelle eingerichtet sind.

2. Superkondensator nach Anspruch 1, wobei die zweite Redoxspezies ausgewählt ist aus der Gruppe, welche aus Tetramethylpiperidin (TEMPO) Verbindungen, Ferrocen-Verbindungen, Hydrochinon-Verbindungen und Mischungen davon besteht.

3. Superkondensator nach Anspruch 1 oder 2, wobei die erste Redoxspezies eine organische Verbindung ist, welche eine Heteroarylgruppe umfasst, welche ein Stickstoffatom aufweist; vorzugsweise eine Pyridylgruppe; wobei vorzugsweise die erste Redoxspezies ausgewählt ist aus DiquatVerbindungen, Viologen-Verbindungen und Mischungen davon.

4. Superkondensator nach einem der Ansprüche 1 bis 3, wobei die zweite Redoxspezies aus der Gruppe ausgewählt ist, welche aus 4-Hydroxy-2,2,6,6-tetramethylpiperidin-1-oxyl, (Ferrocenylmethyl)trimethylammoniumchlorid, Hydrochinon und Mischungen davon besteht.

5. Superkondensator nach einem der Ansprüche 1 bis 5, wobei die erste Redoxspezies aus Diquatverbindungen, Viologenverbindungen und Mischungen davon ausgewählt ist; und wobei die zweite Redoxspezies aus der Gruppe ausgewählt ist, welche aus Tetramethylpiperidin (TEMPO)-Verbindungen, Ferrocenverbindungen, Hydrochinonverbindungen und Mischungen davon besteht.

6. Superkondensator nach einem der Ansprüche 1 bis 5, wobei die erste Redoxspezies aus Methylviologendichlorid oder 1,1' -Bis(3-sulfonatopropyl)-4,4' -bipyridinium ausgewählt ist; und wobei die zweite Redoxspezies aus 4-Hydroxy-2,2,6,6-Tetramethylpiperidin-1-oxyl, (Ferrocenylmethyl)trimethylammoniumchlorid, Hydrochinon und Mischungen davon ausgewählt ist.

7. Superkondensator nach einem der Ansprüche 1 bis 6, wobei jede der beiden Elektroden des Superkondensators aus einem Kohlenstofffilz und einer Kohlenstoffzusammensetzung besteht, welche Aktivkohlepartikel umfasst; und wobei die Kohlenstoffzusammensetzung in jeder der Elektroden in einer unterschiedlichen Menge vorliegt; vorzugsweise in einer Menge von über 1 mg/cm$^2$.

8. Superkondensator nach einem der Ansprüche 1 bis 7, wobei die Aktivkohlepartikel in der Kohlenstoffzusammensetzung wenigstens 60 Gew.-% des Gesamtgewichts der Kohlenstoffzusammensetzung ausmachen und wobei die Kohlenstoffzusammensetzung ferner wenigstens 5 Gew.-% Rußpartikel umfasst, und/oder wobei der Kohlenstofffilz ein Graphitfilz ist.

9. Superkondensator nach einem der Ansprüche 1 bis 8, wobei die wenigstens eine Elektrode durch ein Verfahren erhalten worden ist, welches die folgenden Schritte umfasst:

(i) Bereitstellen von

a. einem Graphitfilz; und
b. einer Kohlenstoffsuspension, welche wenigstens 60 Gew.-% des Gesamtgewichts der Kohlenstoffsuspension an Aktivkohlepartikeln und wenigstens 5 Gew.-% Rußpartikel umfasst;

(ii) Beschichten und Imprägnieren des Graphitfilzes mit der Kohlenstoffsuspension, um einen mit Kohlenstoffsuspension beschichteten und imprägnierten Graphitfilz zu erhalten; und
(iii) Erhitzen des Graphitfilzes mit der Kohlenstoffsuspension aus Schritt (i) auf eine Temperatur zwischen 50 und 400 °C während 1 bis 10 Stunden, um einen Graphitfilz mit einer Kohlenstoffzusammensetzung zu erhalten.

10. Superkondensator nach einem der Ansprüche 1 bis 9, wobei der Katholyt und/oder der Anolyt ferner ein Salz und ein polares Lösungsmittel wie Wasser umfasst.

11. Superkondensator nach einem der Ansprüche 1 bis 10, umfassend:

- zwei Elektroden, wobei jede der beiden Elektroden besteht aus

∘ einem Graphitfilz; und
∘ einer Kohlenstoffzusammensetzung, bestehend aus

■ Aktivkohlepartikeln, welche wenigstens 60 Gew.-% des Gesamtgewichts der Kohlenstoffzusammensetzung ausmachen,
■ Rußpartikeln; und
■ einem Bindemittel;

wobei die Kohlenstoffzusammensetzung den Kohlenstofffilz beschichtet und imprägniert;

- einen Elektrolyten, umfassend:

  ○ einen Anolyt, umfassend eine erste Redoxspezies, und

  ○ einen Katholyt, umfassend eine zweite Redoxspezies;

wobei die erste und die zweite Redoxspezies unterschiedliche Redoxspezies sind; wobei die zweite Redoxspezies eine organische oder eine metallorganische Verbindung ist; vorzugsweise wobei die zweite Redoxspezies aus der Gruppe ausgewählt ist, welche aus 4-Hydroxy-2,2,6,6-tetramethylpiperidin-1-oxyl, (Ferrocenylmethyl)trimethylammoniumchlorid, Hydrochinon und Mischungen davon besteht; wobei die erste Redoxspezies eine organische Verbindung ist, welche eine Pyridylgruppe umfasst; vorzugsweise wobei die erste Redoxspezies aus Diquatverbindungen, Viologenverbindungen und Mischungen davon ausgewählt ist;

- einen Separator; und
- Mittel, welche zum Verbinden mit einer Leistung-/Lastquelle eingerichtet sind.

12. Energiespeicher- oder -versorgungssystem, welches einen oder mehrere Superkondensatoren nach einem der Ansprüche 1 bis 11 umfasst.

13. Verfahren zum Speichern von Elektrizität, umfassend die Schritte, aus:

a) Bereitstellen eines Superkondensators nach einem der Ansprüche 1 bis 11;
b) Anlegen einer elektrischen Spannung oder eines elektrischen Stroms zwischen den Elektroden des Superkondensators aus Schritt (a), um eine Elektrode mit positiver Ladung und die andere Elektrode mit negativer Ladung zu erhalten,
wobei gleichzeitig die Redoxspezies des Elektrolyten an der positiven Elektrode zum entsprechenden oxidierten Zustand oxidiert werden, während die Redoxaktivspezies des Elektrolyten an der negativen Elektrode zum entsprechenden reduzierten Zustand reduziert werden; und
c) Speichern von Ladung an der positiven Elektrode und an der negativen Elektrode.

14. Verfahren zur Stromabgabe, umfassend die Schritte, aus:

a) Bereitstellen eines Superkondensators nach einem der Ansprüche 1 bis 11; wobei eine Elektrode eine positive Ladung und die andere Elektrode eine negative Ladung aufweist;
b) Erzeugen einer elektrischen Spannung oder eines elektrischen Stroms zwischen den Elektroden durch Reduzieren der oxidierten Redoxspezies des Elektrolyten auf den entsprechenden reduzierten Zustand an der positiven Elektrode, während die reduzierten Redoxaktivespezies an der negativen Elektrode auf den entsprechenden oxidierten Zustand oxidiert werden; und
Liefern der Ladung, welche an der positiven Elektrode und an der negativen Elektrode gespeichert wird.

15. Verwendung des Superkondensators nach einem der Ansprüche 1 bis 11 oder des Energiespeicher- oder -versorgungssystems nach Anspruch 12, um Elektrizität zu speichern oder zu liefern.

**Revendications**

1. Supercondensateur comprenant :

- deux électrodes, au moins une des électrodes étant constituée d'un feutre de carbone et d'une composition de carbone comprenant des particules de charbon actif, dans lequel la composition de carbone revêt et imprègne le feutre de carbone,
- un électrolyte comprenant : un anolyte comprenant une première espèce redox et un catholyte comprenant une seconde espèce redox, les première et seconde espèces redox étant des espèces redox différentes, et dans lequel la seconde espèce redox est un composé organique ou organométallique,
- un séparateur, et

des moyens adaptés pour être reliés à une source d'alimentation/de charge.

**2.** Supercondensateur selon la revendication 1, dans lequel la seconde espèce redox est choisie parmi le groupe constitué de composés tétraméthylpipéridine (TEMPO), de composés ferrocène, de composés hydroquinone et de mélanges de ceux-ci.

**3.** Supercondensateur selon la revendication 1 ou 2, dans lequel la première espèce redox est un composé organique comprenant un groupe hétéroaryle possédant un atome d'azote, de préférence un groupe pyridyle, dans lequel la première espèce redox est de préférence choisie parmi des composés diquat, des composés viologène et des mélanges de ceux-ci.

**4.** Supercondensateur selon l'une quelconque des revendications 1 à 3, dans lequel la seconde espèce redox est choisie parmi le groupe constitué de 4-hydroxy-2,2,6,6-tétraméthylpipéridin-1-oxyle, de chlorure de (ferrocénylméthyl)triméthylammonium, d'hydroquinone et des mélanges de ceux-ci.

**5.** Supercondensateur selon l'une quelconque des revendications 1 à 4, dans lequel la première espèce redox est choisie parmi des composés diquat, des composés viologène et des mélanges de ceux-ci, et dans lequel la seconde espèce redox est choisie parmi le groupe constitué de composés tétraméthylpipéridine (TEMPO), de composés ferrocène, de composés hydroquinone et de mélanges de ceux-ci.

**6.** Supercondensateur selon l'une quelconque des revendications 1 à 5, dans lequel la première espèce redox est choisie parmi du dichlorure de méthyl viologène ou un 1,1' - bis(3-sulfonatopropyl)-4,4'-bipyridinium, et dans lequel la seconde espèce redox est choisie parmi du 4-hydroxy-2,2,6,6-tétraméthylpipéridin-1-oxyle, du chlorure de (ferrocénylméthyl)triméthylammonium, de l'hydroquinone et des mélanges de ceux-ci.

**7.** Supercondensateur selon l'une quelconque des revendications 1 à 6, dans lequel chacune des deux électrodes du supercondensateur est constituée d'un feutre de carbone et d'une composition de carbone comprenant des particules de charbon actif, et dans lequel la composition de carbone est présente en une quantité différente dans chacune des électrodes, de préférence en une quantité supérieure à 1 mg/cm$^2$.

**8.** Supercondensateur selon l'une quelconque des revendications 1 à 7,

dans lequel les particules de charbon actif sont dans la composition de carbone à raison d'au moins 60 % en poids du poids total de la composition de carbone et dans lequel la composition de carbone comprend en outre des particules de noir de carbone à raison d'au moins 5 % en poids,
et/ou,
dans lequel le feutre de carbone est un feutre de graphite.

**9.** Supercondensateur selon l'une quelconque des revendications 1 à 8, dans lequel la au moins une électrode a été obtenue par un procédé comprenant les étapes (i) suivantes consistant à

(i) fournir :

a. un feutre de graphite, et
b. une pâte de carbone comprenant au moins 60 % en poids du poids total de la pâte de carbone de particules de charbon actif et au moins 5 % en poids de particules de noir de carbone,

(ii) revêtir et imprégner le feutre de graphite avec la pâte de carbone pour obtenir un feutre de graphite revêtu et imprégné de pâte de carbone, et
(iii) chauffer le feutre de graphite avec la pâte de carbone de l'étape (i) à entre 50 et 400 °C pendant 1 à 10 h pour obtenir un feutre de graphite avec une composition de carbone.

10. Supercondensateur selon l'une quelconque des revendications 1 à 9, dans lequel le catholyte et/ou l'anolyte comprend en outre un sel et un solvant polaire tel que de l'eau.

11. Supercondensateur selon l'une quelconque des revendications 1 à 10, comprenant :

   - deux électrodes, chacune des deux électrodes étant constituée

      ◦ d'un feutre graphite, et
      ◦ d'une composition de carbone constituée

         ▪ de particules de charbon actif présentes à raison d'au moins 60 % en poids du poids total de la composition de carbone,
         ▪ de particules de noir de carbone et
         ▪ d'un liant,

      dans lequel la composition de carbone revêt et imprègne le feutre de carbone,

   - un électrolyte comprenant :

      ◦ un anolyte comprenant une première espèce redox, et
      ◦ un catholyte comprenant une seconde espèce redox,
      dans lequel les première et seconde espèces redox sont des espèces redox différentes, la seconde espèce redox étant un composé organique ou organométallique, dans lequel la seconde espèce redox est de préférence choisie parmi le groupe constitué du 4-hydroxy-2,2,6,6-tétraméthylpipéridine-1-oxyle, du chlorure de (ferrocénylméthyl)triméthylammonium, de l'hydroquinone et des mélanges de ceux-ci,
      dans lequel la première espèce redox est un composé organique comprenant un groupe pyridyle, dans lequel la première espèce redox est de préférence choisie parmi des composés diquat, des composés viologène et des mélanges de ceux-ci,

   - un séparateur ; et
   - des moyens adaptés pour être reliés à une source d'alimentation/de charge.

12. Système de stockage ou de fourniture d'énergie comprenant un ou plusieurs supercondensateurs selon l'une quelconque des revendications 1 à 11.

13. Procédé de stockage d'électricité comprenant les étapes consistant à :

   a) fournir un supercondensateur selon l'une quelconque des revendications 1 à 11,
   b) appliquer une tension ou un courant électrique entre les électrodes du supercondensateur de l'étape (a) pour obtenir une électrode à charge positive et l'autre électrode à charge négative,
   oxyder simultanément les espèces redox de l'électrolyte jusqu'à l'état oxydé correspondant sur l'électrode positive pendant que les espèces redox actives de l'électrolyte sont réduites jusqu'à l'état réduit correspondant sur l'électrode négative, et
   c) stocker la charge sur l'électrode positive et l'électrode négative.

14. Procédé de fourniture d'électricité comprenant les étapes consistant à :

   a) fournir un supercondensateur selon l'une quelconque des revendications 1 à 11, dans lequel une électrode a une charge positive et l'autre électrode a une charge négative,
   b) générer une tension ou un courant électrique entre les électrodes en réduisant les espèces redox oxydées de l'électrolyte jusqu'à l'état réduit correspondant sur l'électrode positive pendant que les espèces redox actives réduites sont oxydées jusqu'à l'état oxydé correspondant sur l'électrode négative, et
   délivrer la charge stockée sur l'électrode positive et sur l'électrode négative.

15. Utilisation du supercondensateur selon l'une quelconque des revendications 1 à 11 ou du système de stockage ou de fourniture d'énergie selon la revendication 12 pour stocker ou distribuer de l'électricité.

Figure 1

**Figure 2**

Figure 3

Figure 4

Figure 5

Figure 6

Figure 7

Figure 8

Figure 9

**EP 4 437 572 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017256366 A1

- WO 2018119044 A1

**Non-patent literature cited in the description**

- **NAVALPOTRO et al.** *Journal of Power Sources*, 2016, vol. 306, 711-717